# EUROPEAN PATENT APPLICATION

(11) **EP 2 447 525 A1**
(43) Date of publication of application: **02.05.2012**
(21) Application number: 10462006.7
(22) Date of filing: 27.10.2010
(51) Int. Cl.: F03D 3/02, F03D 3/04

(54) **Vertical axis wind turbine**

(71) Applicant: Komjáthy, Miklós, 1118 Budapest (HU)
(72) Inventor: Komjáthy, Miklós, 1118 Budapest (HU)

(57) **Abstract**

The subject of this invention is to find the solution of installation of the vertical-axle wind energies utilizer equipments next to each other. The equipment/invention is a wind flow control, which regulates the utilizable flow energies to reach by the most ideal way the blades that providing the rotational energy, while creating low-pressure area in the rotational angle of the returning blades. As the utilizable wind energy becomes regulated due to this equipment, so it allows the operation of windmill, wind power machine and wind generator in case of low and stormy wind conditions, as well.

## Description

### 1.1. The subject of the invention:

To develop an equipment to rise efficacy of vertical axis wind turbines. The equipment/invention is a wind flow control, which controls the utilizable flow energies to reach most ideally the blades creating rotational energy, while makes low pressure in the rotational angle and area of the returning blades.

The gist of the invention doesn't change, but its solutions can be modified by the realization of "shading", according to a right developed size and form, because it depends on utilization, on reaching the aim of efficacy, site conditions and in case of existing systems depends on existing technical facilities, as well. By this equipment the utilizable wind become controlled, that results the possibility to develop an efficient windmill, wind power plan, wind generator in case of low and/or rotary wind energy, too. This equipment generates a constant low pressure area in the line of returning blades, so the blades which are connected to the axis, have to surmount only the aerodynamic that caused by their own form. The equipment eliminates the action of powers which is reactive and reducing output that caused by flows.

To follow up the changing line wind energy the machinery operating with a well-known technique that works by the weathervane principle - mainly the wind settled down by wings-what can provide the constant ideal setting.

By electronic control can be ensured the safe operation in other wind area - in case of high wind speeds - as well. This function can be reached by the regulation of shading what becomes in the receiving area.

### 1.2 Scopes:

The equipment is able to raise efficacy of lamellared or fixed blade-lines, vertical axis windmill and wind generator.

### 1.3

The present state of technology:
The present developed and produced equipments are proceeds from those physical qualities, that kinetic energy can be created by blades, rotors which forms and generates based on aeronautical experience. The proper rotational energy force can be achieved by connecting blades, by binding to the axle, that becomes utilizable as electric or kinetic energy. As a result of this attitude, the developments of rotor, medium and high-powered equipments or rather, low powered, vertical blade- line, generating electricity equipments, what can be found presently.
The present systems are focusing on creating of one-one blade form and the proper shaped blades fixed to one axle.

### 1.4 The closest solutions to the invention:

In case of HVAC application: the regulation of air deflector, air convection what is regulated by lamellar.

In case of water energy utilizer systems: letting hydropower over the most rotund area of the turbine blades in a controlled way, such as Pelton turbine's application.

### 1.5 Description of the deficiencies on which will be changed by the invention:

In case of development of some flow energy utilizer equipments, the developers are aspired to set up the equipment with the most effective blades, optimized solutions what is depending on utilization.

When shaping blades, the force of acting on blade/blades, must be higher on one side than another, considering to that clear regularity. The force caused by overpressure becomes utilized.

The blades arranged in row come to be placed on an axle efforting in one way to that.

In case of wind energy the equipment's blades are touching airflow in every moment and they have to surmount their own drag, as well. The result of it, that the windmills, wind generators are making utilizable energy by relatively big and permanent wind-force. The transmission of rotational energy is retarded by wind energy, when the rotor's blades are in the returning phase. Presently, is not possible to put close to each other wind generators, because the blades, the engine room causing unpredictable turbulence, and these could adversely influence each other operation in case of "havaria"/emergency. This invention can change these deficiencies. If, we let to go the generated wind energy power only to the receiving face - reducing with this the force that is effecting to the returning blades in the same way- the given output is increasable by the same technical content. These presents outputs are available by new and smaller equipments, as well. The invention can be used in the vertical-axis systems. The plant kind usage of wind generators needs big place, because the turbulence of some wind generators, windmills affecting the efficacy of the equipments placing around. The wind flow control makes possible to install two equipments next to each other, only the rotational circumference should be taken into account in the technical development.

### 1.6 Tasks to solve by the invention:

- Utilization of poor wind-flow, generation of electricity
- Reaching low start-up wind speed
- Increasing the output of the existing systems, generating electricity
- Developing new systems - creating wind generator in an urban environment: pl.: column-mounted system, that supplies electric cars and provides public lighting.
- Realizing installation without construction permit (under 10 meters) in residential area, reaching the minimal protective distance.
- Compared to the existing systems, making more dense installable solutions by close installation to each other of generators supplied by the equipment.
- Realizing trouble-free operation in strong, stormy wind.
- The efficacy of vertical-axle system wind turbine gains of rotor system.
- Reducing the space requirement of wind turbines parks

### 1.7 The most general solution of the targeted task, in accordance with the main point of claim (I. illustration).

### 1.8 Description of the beneficial solutions, in accordance with the sub points of claim:

- The wind deflector can be used for all kind of existing vertical wind turbines, but its installation is depending on the size, form of blades and on the axle connecting system.
- The wind deflector turns into between the working blade and the direction of wind by wind-force.

### 1.9 List of illustrations and their subject's indication:

I. illustration: The picture of general view from above of wind flow control, compare to the system of blades without wind flow control.
II. illustration: Design of producible vertical axle windmill, wind turbine without wind flow control.

Source:
www.atmion.hu/csapagyterv.html+elad%C3%B3+f%C3%BCgg %C5%91leges+sz%C3%A91turbina&hl=hu&ct=clnk&cd=4&gl =hu&lr=lang hu

I. illustration: Relation between wind energy and the blades in case of traditional (1.) and wind flow control.
II. illustration: Plan of a traditional vertical windmill
III. illustration: Example of varieties species of wind flow control (top view)
IV. illustration: General design of the wind flow control.
V. illustration: Design of the wind flow control elements: wind vane (1.), Wind flow control (2.), windmill blade with the axle (3.), plinth (5.)
VI. illustration: Operation of wind deflector in heavy wind
VII. illustration: Use of wind flow control in case of juxtaposed generator, rotor

### 1.10 Presentation of beneficial effects which is connected to the invention - compared to the technical state:

There are a lot of blade and switching solution of vertical axle rotors. I present it by a general description/design (II. illustration), because to reach enhancement of efficacy by using the equipment is valid to every solution in case of similar systems.

The wind vane (V. illustration 1.) provides the optimal setting of wind turning and the immediate reaction time in case of rotary wind. The wind vane comes to be created by fix connection with wind flow control (V. illustration 2.). The wind flow control provides the permanent low-pressured airspace in the area, the line of blades in restoring phase. The wind flow control has established in a greater diameter circle than the line what made by the windmill's blades (V. illustration 3.). The wind flow control is connecting to the outer part of the blade's bearing box, which has designed by bearing solution also, supplying to become rotational, along the same center as the axle-centre of the whole installation. The hollow plinth (V. illustration 5.) is providing the transmission of drived shaft, the powertrain and the mountability, fixibility of the equipment.

We made a research on the website of PIPACS - Patent Library - using many keywords to find inventions which may have the similar technical solution, registered patent protections.

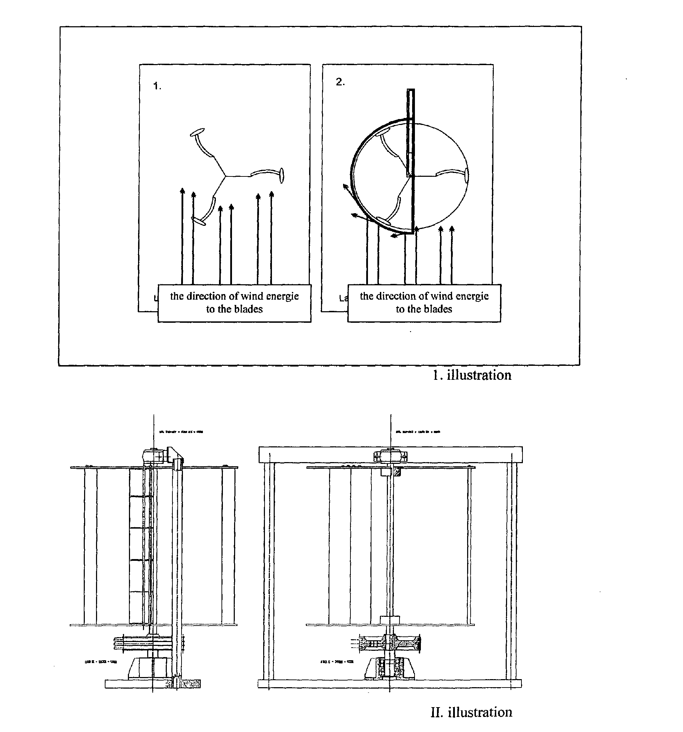

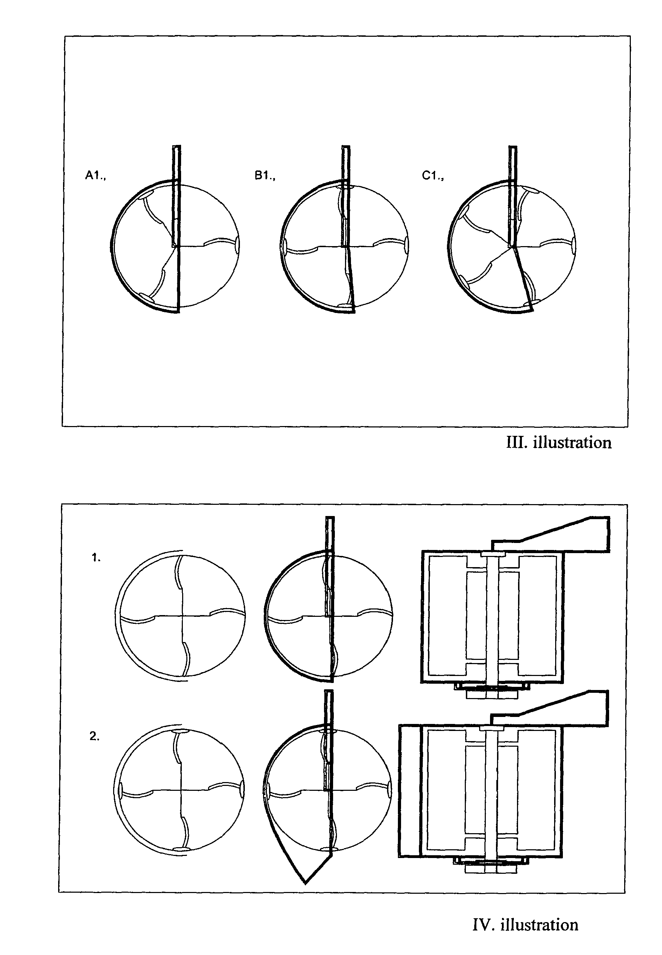

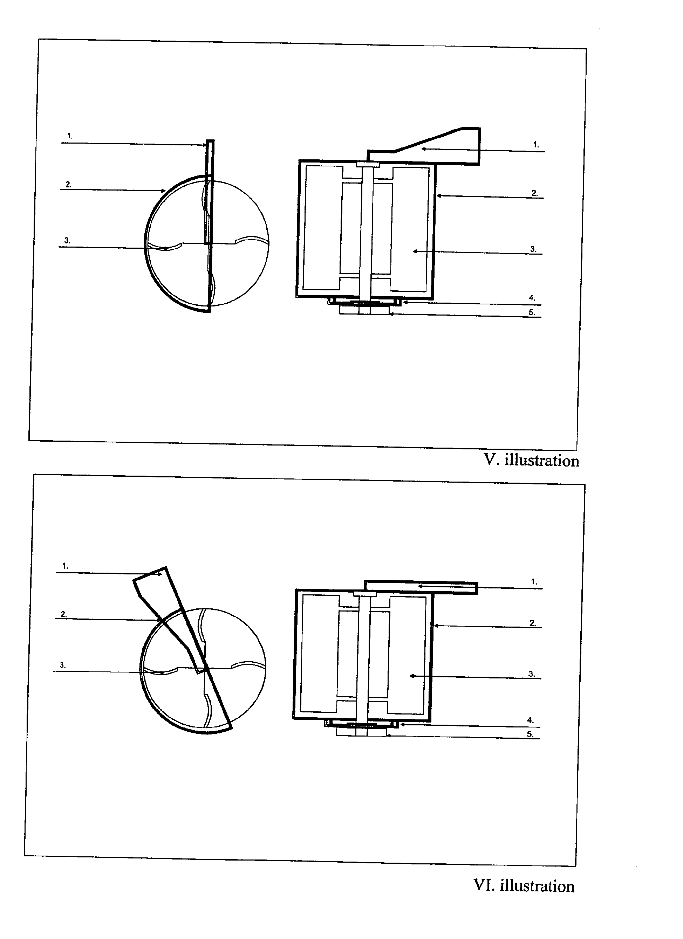

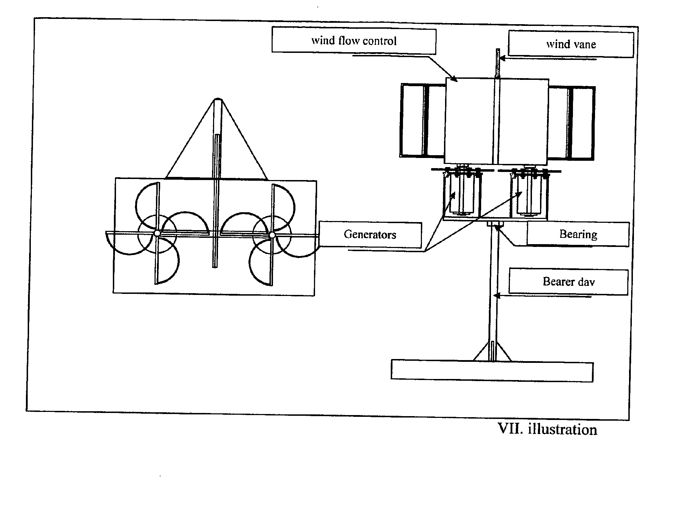

## Claims

1. Main point of claim:
- Developing the technical key to optimize/increase the utilization of wind energy
- To mount two wind generator next to each other.
- Creating new, efficient wind energy utilizer equipment.
- Increasing the utilizable wind area, both in line of low and stormy wind-forces.

2. Sub point of claim
- Making applicable to the most existing systems, also subsequently.
- Developing a solution of wind energy utilization in urban environments.
- Making adaptable the energy supply of electric cars.
- To make it applicable in more function
